Europäisches Patentamt

European Patent Office

Office européen des brevets

(11) Veröffentlichungsnummer : **0 147 730**
**B1**

(12) **EUROPÄISCHE PATENTSCHRIFT**

(45) Veröffentlichungstag der Patentschrift :
25.05.88

(51) Int. Cl.⁴ : **G 06 K 17/00**, G 06 K 13/02,
**B 41 J 25/24**

(21) Anmeldenummer : **84115330.7**

(22) Anmeldetag : **13.12.84**

(54) **Belegcodierer.**

(30) Priorität : **27.12.83 DE 3347168**

(43) Veröffentlichungstag der Anmeldung :
**10.07.85 Patentblatt 85/28**

(45) Bekanntmachung des Hinweises auf die Patenterteilung : **25.05.88 Patentblatt 88/21**

(84) Benannte Vertragsstaaten :
**AT CH DE FR GB IT LI NL SE**

(56) Entgegenhaltungen :
**EP-A- 0 019 080**
**EP-A- 0 037 941**
**DE-A- 3 105 853**
**DE-A- 3 209 083**
**FR-A- 2 507 965**
**US-A- 4 082 945**
**IBM TECHNICAL DISCLOSURE BULLETIN, Band 21,
Nr. 1, Juni 1978, Seite 238, Armonk, N.Y., US; F.J.
DiMARCO u.a.: "Slotted platen duplex printer"**

(73) Patentinhaber : **Mannesmann Kienzle GmbH
Heinrich-Hertz-Strasse
D-7730 Villingen-Schwenningen (DE)**

(72) Erfinder : **Dyma, Horst,
Langes Gewann. 26
D-7730 Villingen-Schwenningen (DE)**
Erfinder : **Heindke, Armin,
Steinbühlstrasse 6
D-7730 Villingen-Schwenningen (DE)**

**Beschreibung**

Die Erfindung betrifft einen Belegcodierer als Auf-Tisch-Gerät, der eine Eingabestation für den Beleg, und Transportmittel zum Transportieren des Beleges in eine Ablagestation aufweist, wobei zwischen Eingabestation und Ablagestation modular aufgebaute feststehende Druck- bzw. Markierungsvorrichtungen angeordnet sind.

Bei den Belegcodierern kann man unterscheiden einerseits zwischen sog. Allzweckgeräten und den Teilgeräten, die also entweder nur zum Vorcodieren der Belege oder nur zum Nachcodieren der Belege dienen. Die Allzweckgeräte sind in der Regel so modular aufgebaut, daß sie beliebig auf- und abrüstbar sind durch Anbau oder Weglassen einzelner Bestandteile. Die Vor- und Nachcodierer dagegen sind wesentlich weniger aufwendig gebaut, sind aber eben in der Regel nur Einzweckgeräte und lassen sich nicht ohne weiteres auf- und abrüsten. Durch die Möglichkeit bzw. Notwendigkeit, die sog. Allzweckgeräte beliebig auf- bzw. abzurüsten, ergeben sich bisher relativ große Bauformen, die nur als Standgeräte zu verwirklichen sind. Dies ist bei den bekannten Belegcodierern insbesondere dann der Fall, wenn der Beleg bei seiner Bearbeitung mehrere Druckstationen passieren muß, z. B. den eigentlichen Codierdrucker, der die Codierleiste erzeugt und die Schrift in einer maschinell lesbaren Form anbieten muß, die Indossier- und Entwertungsstempel und etwaige Personalisierungsdrucker und dergl. Hier ist die Anordnung im allgemeinen so getroffen, daß der Beleg auf seiner Transportbahn die einzelnen Druckstationen nacheinander passiert, so daß die Länge der Transportbahn die Summe der verschiedenen auf den Beleg einwirkenden Druckvorrichtungen bzw. der entsprechenden Druckbereiche darstellt. Die Länge der Transportbahn ist aber gleichzeitig auch bestimmend für die gesamten Abmessungen des Codierers.

Ein Belegcodierer als Standgerät ist aus der US-A1-4,082,945 bekannt. Der bekannten Lösung liegt nicht das Ziel zugrunde, einen kompakten Belegcodierer zu schaffen. Es wird vielmehr ein räumlich sehr ausgedehntes Belegverarbeitungs-System mit zwei einander zugeordneten Belegverarbeitungseinheiten der Standgeräte-Bauart beschrieben. Die hierbei verwendete Konfiguration der Transportbahn ist dort in Form eines « V » gewählt, bei dem die beiden Schenkel der Transportbahn tangential an eine Trommel verlaufen. Diese Trommel ist nachteilig. Bei einer Trommel muß deren Durchmesser die Breite der Vorrichtung abgeben. Vergleicht man eine solche Umlenkung mit einer U-förmigen Transportbahn, so müßte der Trommeldurchmesser der Breite eines « U » entsprechen. Der Fußbereich des « U » könnte daher nur halbkreisförmig sein.

Eine andere bekannte Lösung (EP-A1-00 19 080) strebt an, eine Druckeinrichtung zu schaffen, die trotz hoher Arbeitsgeschwindigkeit im « fliegenden Druck » Zeichen auf Einzelbelege drucken kann, die den Anforderungen für maschinenlesbare Schriften genügen. Hierbei wird eine im wesentlichen geradlinige Transportstrecke vorgeschlagen, bei der sämtliche Druck- bzw. Markierungsvorrichtungen in einer Reihe angeordnet sind, so daß das Gerät eine entsprechend große Länge aufweist.

Aufgabe der Erfindung ist es demgegenüber, einen elektronischen Belegcodierer mit unterschiedlichen Druckvorrichtungen is derartiger Anordnung zu gestalten, daß sich auch bei Kombination der größtmöglichen Anzahl von Druckvorrichtungen eine kompakte Bauform ergibt, so daß das Gerät nicht mehr als Standmodell gebaut werden muß, sondern als ein Auf-Tisch-Gerät ausgestaltet werden kann.

Die gestellte Aufgabe wird aufgrund des eingangs bezeichneten Belegcodierers erfindungsgemäß dadurch gelöst, daß die auf einem Chassis im wesentlichen U-förmige Transportbahn einen Ausgangsschenkel bildet, der aus Antriebsrollen mit einem diese umschlingenden, die Transportbahn begrenzenden ersten Transportriemen und einem zweiten, um zwei Antriebsrollen geschlungenen Transportriemen besteht, der dem ersten Transportriemen, den Beleg zwischen sich führend, gegenüberliegt, daß der Eingangsschenkel aus der Eingabestation besteht, wobei Eingangsschenkel und Ausgangsschenkel durch einen Teil der Transportbahn verbunden sind und daß an dem Ausgangsschenkel die Druck- bzw. Markierungsvorrichtungen mit den zugehörigen Druckwiderlagern derart angeordnet sind, daß einige der Druck- bzw. Markierungsvorrichtungen sich seitlich versetzt gegenüberliegen. Auf diese Weise erreicht man ein sehr kompaktes Auf-Tisch-Gerät, das dennoch eine hohe Anzahl von Belegbearbeitungsstationen aufweist.

In Ausgestaltung der Erfindung ist vorgesehen, daß die den Codierdruck bewirkende Druckvorrichtung ein Typenraddruckwerk mit auf beweglichen Speichen angeordneten Drucktypen ist.

In Verbesserung dieses Gedankens ist vorgesehen, daß das Typenraddruckwerk auf seinem Tragteil von der Druckunterlage zurückziehbar und verschwenkbar angeordnet ist zum Wechseln der Typenscheibe.

Eine andere Verbesserung besteht darin, daß mehrere gleiche oder unterschiedliche Typensätze auf dem Typenrad angeordnet sind.

Eine andere Ausgestaltung besteht darin, daß die Druckunterlage mit mehreren Druckwiderlagern ausgerüstet und in jeweils eine Arbeitsstellung drehbar ist.

Wesentliche Merkmale sind außerdem darin zu sehen, daß zwei Stempeldruckwerke für die Anbringung von Indossier- und Entwertungsstempeln wahlweise beidseits der Transportbahn für die Belege auf ihren Tragteilen mittels der Aufnahmemittel derart angeordnet sind, daß sie in Transportrichtung im wesentlichen an der gleichen Stelle, aber höhenversetzt, zu dem Beleg sind.

Weiterhin wird vorgeschlagen, daß zwei Druckvorrichtungen in Form von Nadeldruckköpfen wahlweise jeder Vorder- und Rückseite des Beleges zugeordnet sind, wobei Aufnahmemittel für die Druckunterlagen und Aufnahmemittel und Tragteile für die Druckvorrichtungen in Transportrichtung der Belege um ein geringes Maß versetzt angeordnet sind.

Merkmale der Erfindung ergeben sich schließlich daraus, daß das Tragteil einer mit einem Nadeldruckkopf ausgestatteten Druckvorrichtung durch ein Getriebe höhenverstellbar ist, derart, daß bei mehrfachem Vorbeibewegen des Beleges über Transportmittel ein Druck in mehreren Zeilen erfolgt.

Weitere Einzelheiten der erfindungsgemäßen Anordnung ergeben sich aus der nachfolgenden Beschreibung eines Ausführungsbeispieles der Erfindung. Es zeigen :

FIG. 1 eine Übersicht über die grundsätzliche Anordnung,

FIG. 2 eine perspektivische Darstellung der Anordnung der verschiedenen Druckwerke, und

die FIG. 3a und 3b zusammengenommen eine Draufsicht auf die wesentlichsten Teile der Anordnung in gegenüber FIG. 1 vergrößertem Maßstab.

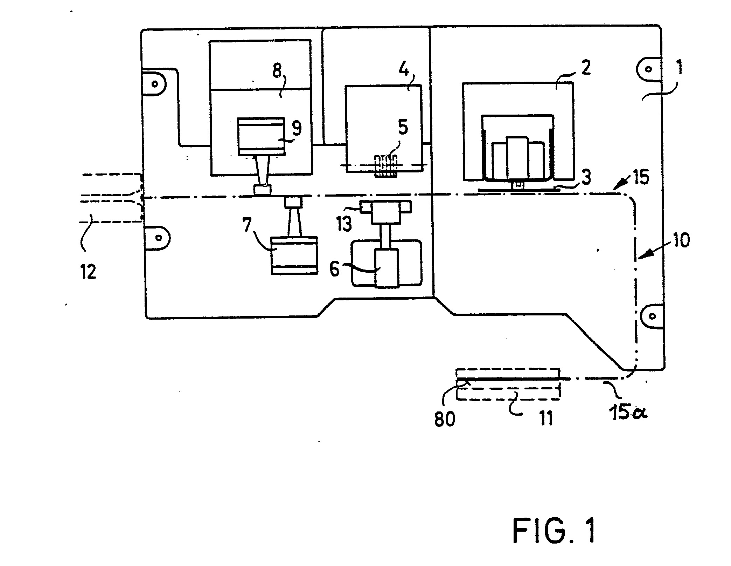

Zunächst sei anhand einer Betrachtung der Übersichtszeichnung gemäß FIG. 1 ein Überblick über die Anordnung gegeben. In einem Chassis 1 sind fünf Druckvorrichtungen gelagert bzw. befestigt, nämlich ein Codierdruckwerk 2 mit einer Typenradscheibe 3, ein Stempeldruckwerk 4 mit einem Datendruckwerk 5, ein weiteres Stempeldruckwerk 6 mit einem Stempelkissen 13, eine Indossierdruckvorrichtung 7 in Form eines Nadeldruckers 9 und wahlweise eine Personalisierungsdruckvorrichtung 8, welche ebenfalls als Nadeldrucker 9 ausgebildet ist. Die Transportbahn 10 für die Belege 80 ist nur schematisch angedeutet. Sie beginnt an der Eingabestation 11, welche an dem einen freien Schenkel 15a der U-förmigen Transportbahn 10 liegt. An dem anderen freien Schenkel 15 der Transportbahn liegen sämtliche Druckvorrichtungen beidseits dieser Transportbahn, so daß der Beleg 80 beidseits bedruckt wird. Die Transportbahn 10 endet dann in einer Ablagestation 12.

Das Codierdruckwerk 2, mit der Typenradscheibe 3 ist das eigentliche Druckwerk, welches mit einer Codierleiste auf dem Beleg 80 zusammenarbeitet und maschinell lesbare Schriftzeichen erzeugt. Hierzu ist die Typenradscheibe 3 in Form eines mit elastischen Speichen versehenen Rades ausgebildet, an deren obigen Enden die Vollkonturendrucktypen angeordnet sind. Die beiden Stempeldruckwerke 4 und 6 sind Schlagdruckwerke, die stempelförmige Aufdrucke erzeugen, wobei das Stempeldruckwerk 4 als Datumdruckwerk 5 ausgebildet ist, während das Stempeldruckwerk 6 im wesentlichen ein Bearbeitungsklischee 13 umfaßt, das also der Maschinenbedienung zugeordnet ist und von dieser selbst entnommen werden kann, wenn die Arbeit beendet ist. Das Indossierdruckvorrichtung 7 erzeugt einen variablen Indossierdruck, der beispielsweise die Prima-Nota-Nummer und das Buchungsdatum umfaßt. Die Personalisierungsdruckvorrichtung 8 dagegen ist beispielsweise dazu vorgesehen, in mehreren Zeilen übereinander den Scheck mit einer Adresse oder dergl. zu versehen. Es sei an dieser Stelle vermerkt, daß sämtliche der Druckvorrichtungen wahlweise einsetzbar sind, so daß das Gerät beliebig auf- bzw. abrüstbar ist.

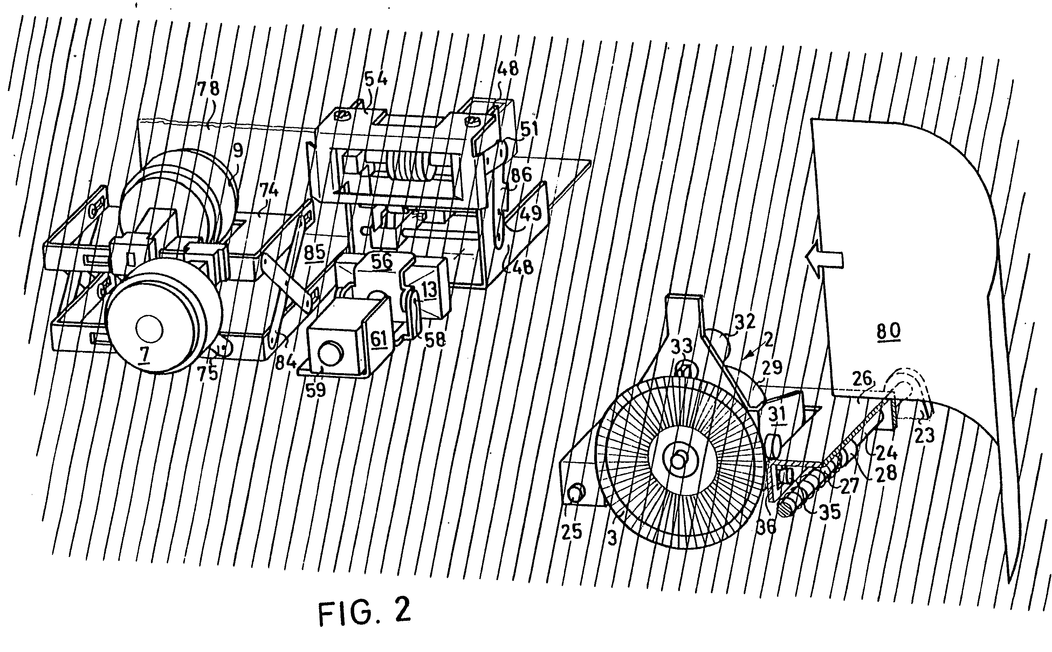

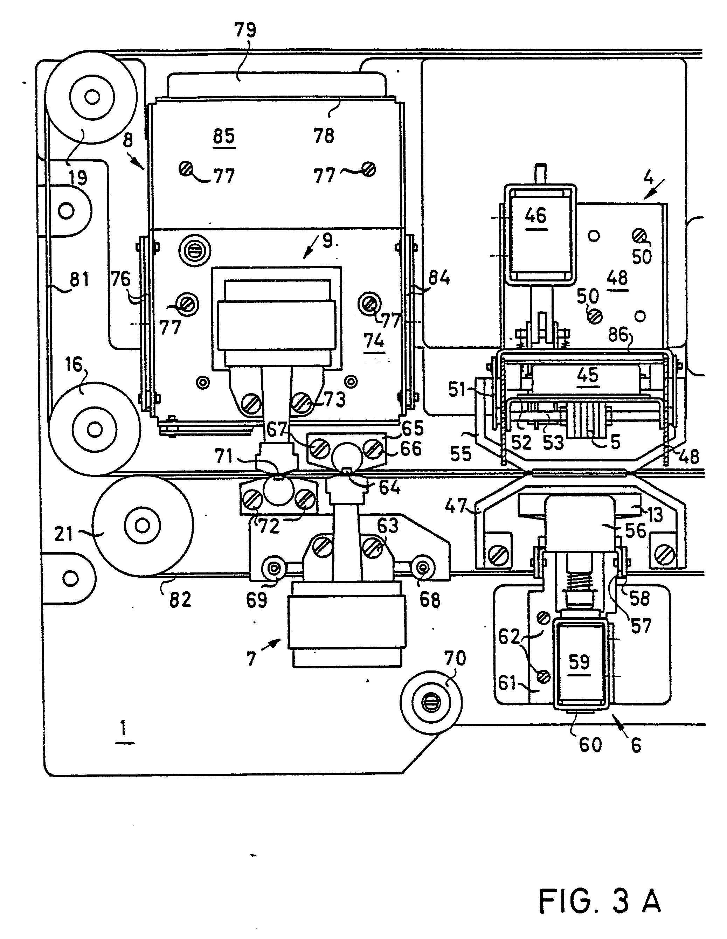

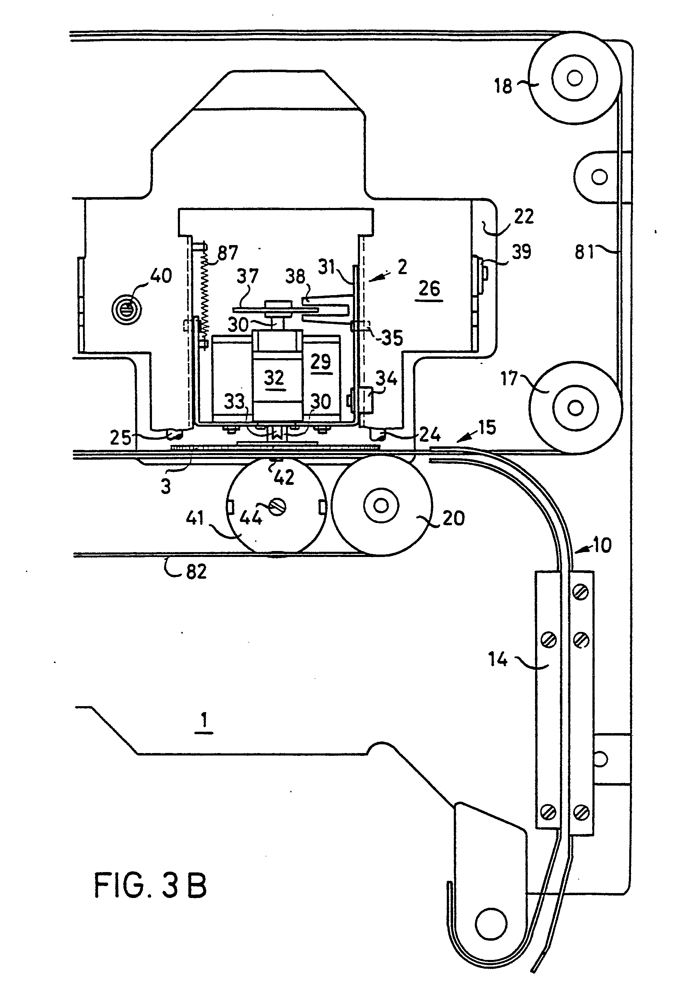

Eine größere und damit detailliertere Darstellung der erfindungsgemäßen Anordnung der Druckvorrichtungen ergibt sich aus FIG. 2, insbesondere aber aus den FIG. 3a und 3b, die zusammengenommen der Darstellung gemäß FIG. 1 entsprechen. Wie bereits erläutert, ist die Transportbahn 10 für die Belege 80 im wesentlichen U-förmig ausgebildet, wobei man in FIG. 3b links den die beiden Schenkel 15, 15a dieser Transportbahn 10 verbindenden Teil 14 der Transportbahn 10 erkennt und den Schenkel 15, an dem die verschiedenen Druckvorrichtungen gelagert sind. Der Transport erfolgt über zwei Transportriemen 81, 82, zwischen denen der Beleg 80 festgeklemmt wird. Von diesen beiden Transport-Riemen 81, 82 wird der Beleg 80 auf den Schenkel 15 der Transportbahn 10 übernommen. Der eine Transport-Riemen 81 läuft um die Antriebsrollen 16, 17 und 18, 19 der andere Transport-Riemen 82, der den Beleg 80 dagegenpreßt, wird geführt und angetrieben durch die Antriebs-Rollen 20 und 21. Der Antrieb erfolgt über einen nicht gezeichneten Schrittmotor und ein entsprechendes Getriebe. Zwischen den Antriebsrollen 20 und 21 und 16 und 17 sind jeweils noch weitere Transport- bzw. Anpreßrollen angeordnet, die der sicheren Führung und Klemmung des Beleges 80 dienen, die aber der Übersichtlichkeit wegen fortgelassen worden sind.

In einer Vertiefung 22 des Chassis 1 sind zwischen mehreren Halteaugen 23 (FIG. 2) Trag-Achsen 24 und 25 befestigt, auf denen das Tragteil 26 für das Codierdruckwerk 2 nach rückwärts verschiebbar gelagert ist. Die Halteaugen 23 sind die Aufnahmemittel für das Codierdruckwerk 2, das Tragteil 26 trägt das Codierdruckwerk 2. Durch Federn 27, die sich einerseits an einem ortsfesten Teil 28 und andererseits an dem Tragteil 26 abstützen, wird das Tragteil 26 in die Druckposition vorgeschoben und kann zum Auswechseln der Typenradscheibe 3 gegen die Kraft der Federn 27 zurückgeschoben werden. Die Typenradscheibe 3 wird durch einen Antriebsmotor 29 angetrieben, wobei die Typenradscheibe 3 auf der Motorwelle 30 befestigt ist. Oberhalb des Antriebs-Motors 29, der in einem schwenkbaren Tragteil 31 zusammen mit der Typenradscheibe 3 gehalten ist, ist noch der Anschlagmagnet 32 angeordnet, der über ein Betätigungsglied 33 die Typen der Typenradscheibe 3 in die Druckposition vorschnellen läßt.

Das schwenkbare Tragteil 31 stützt sich mit einem Anschlagbolzen 34 auf dem Tragteil 26 ab und wird durch eine Feder 87 in der Arbeitsstellung gehalten. An dem Tragteil 31 sind Schwenkbolzen 35 angeordnet, die mittels Langlöchern 36 eine Rückwärtsverschiebung des Tragteiles 26

relativ zu den Tragachsen 24 und 25 gestatten und außerdem ein Verschwenken des Tragteiles 31, so daß die Typenradscheibe 3 ausgewechselt werden kann. Eine mit der Motorwelle 30 verbundene Normierungsscheibe 37 wirkt mit einer Lichtschranke 38 zusammen, um bei jedem einmaligen Umlauf der Typenradscheibe 3 ein Normierungssignal abzugeben. Durch eine nicht im Detail gezeigte Rastvorrichtung 39 wird das Tragteil 26 in der zurückgezogenen Stellung gehalten und kann wieder entrastet werden, wenn der Wechsel der Typenradscheibe 3 abgeschlossen ist. In dem Tragteil 26 ist auch ein nicht gezeichneter Antriebsmotor für das Farbband in einer Farbbandkassette angeordnet, der über einen Kupplungsstift 40 mit dem Antrieb der Farbbanddrollen in der Kassette kuppelbar ist.

Als Druckunterlage für die Typenradscheibe 3 dient eine vertikal angeordnete Druckwalze 41, die drehbar ist. Beim Verdrehen der Druckwalze 41 werden vier verschiedene Druckgegenlagen 42 in die Druckstellung gebracht. Es sei an dieser Stelle noch erwähnt, daß es möglich ist, auf der Typenradscheibe entweder vier verschiedene Sätze von Typen, z. B. OCR A, OCR B, CMC 7 usw. unterzubringen, oder auch vier Sätze der gleichen Typen. Weil die Druckgegenlage 42 auf jeden Fall einem großen Verschleiß ausgesetzt ist, ist die drehbare Druckwalze 41 vorgesehen mit vier verschiedenen Druckgegenlagen 42. Eine Schraube 44 dient als Aufnahmemittel für die Druckwalze 41 im Chassis 1.

In der Transportbahn 10 folgen hinter dem Codierdruckwerk 2 die beiden Stempeldruckwerke 4 und 6. Das Stempeldruckwerk 4 ist ein Datumdruckwerk 5, welches dem Beleg 80 eine laufende Nummer aufdruckt. Das Datumdruckwerk 5 ist schwenkbar gelagert und steht in Ruhelage in Berührung mit einem Stempelkissen 45. Durch einen Magneten 46 wird das Datumdruckwerk 5 verschwenkt, so daß es auf einer Druckunterlage 47 zum Abdruck kommt. Das Datumdruckwerk 5 mit dem Stempelkissen 45 ist in einem Tragteil 48 angeordnet, welches mittels zweier Schrauben 50 in dem Chassis 1 befestigt ist. Die Schrauben 50 stellen die Aufnahmemittel für das Stempeldruckwerk 4 in dem Chassis 1 dar. Das Tragteil 48 trägt um Achsen 49 schwenkbare Hebel 86, an denen Lagerhebel 51 für das Datumdruckwerk 5 angelenkt sind. Durch eine nicht gezeichnete Führung wird das Rahmenteil 52, in dem das Datumdruckwerk 5 auf seiner Achse 53 gelagert ist, um 180° verschwenkt, so daß die Druckstelle des Datumdruckwerkes 5 in Eingriff mit der Druckunterlage 47 kommt. Eine Blende 54 deckt das Datumdruckwerk 5 gegen unbeabsichtigte Zugriffe ab, damit die Bedienungsperson sich nicht die Finger beschmutzen kann, und dient gleichzeitig der Papierführung.

Höhenversetzt, aber gegenläufig angeordnet ist das weitere Stempeldruckwerk 6. Dies ergibt sich insbesondere aus der Darstellung gemäß FIG. 2. Bei dem Stempeldruckwerk 4 ist die Druckunterlage 47 oberhalb des Stempeldruckwerkes 6 angeordnet, während umgekehrt bei dem Stempeldruckwerk 6 eine Druckunterlage 55 unterhalb des Stempeldruckwerkes 4 angeordnet ist. Das Stempeldruckwerk 6 besteht aus dem farbgetränkten Stempelkissen 13, welches ein Klischee ist und welches z. B. die Informationen der verarbeitenden Bank und hinsichtlich der Bedienungsperson enthält. Das Stempelkissen 13 ist an einem Befestigungsteil 56 angeordnet, welches an zwei Lappen 57 schwenkbar angebracht ist. Auf diese Art und Weise kann das Stempelkissen 13 um den Schwenkpunkt 58 verschwenkt werden, so daß es von der Bedienungsperson ausgetauscht oder nachgetränkt werden kann. Ein Magnet 59 wirkt über einen Anker 60 auf das Stempelkissen 13 ein, so daß dieses zum Abdruck auf der Druckunterlage 55 gebracht wird. Das Stempelkissen 13 mit seinen Lappen 57 und der Magnet 59 sind in einem Tragteil 61 gelagert, welches mittels zweier Schrauben 62 im Chassis 1 befestigt ist. Die Schrauben 62 stellen die Aufnahmemittel für das Stempeldruckwerk 6 dar.

Nach den beiden Stempeldruckwerken 4 und 6 folgen im Verlaufe der Transportbahn 10 die Indossierdruckvorrichtung 7 und die Personalisierungsdruckvorrichtung 8, die aus Nadeldruckwerken bestehen. Der Nadeldrucker 9 ist feststehend angeordnet und mittels zweier Schrauben 63 unmittelbar im Chassis 1 befestigt. Wie bereits erläutert, dient der Nadeldrucker 9 der Aufbringung zusätzlicher Indossiervermerke durch Ausdrucken einer Primanot-Bezeichnung und auch eines Datums auf dem zu indossierenden Beleg. Die Druckvorrichtung ist in Form eines Nadeldruckkopfes, dessen Drucknadeln auf eine Druckunterlage 64 einwirken. Die Druckunterlage 64 ist auf einem Tragteil 65 befestigt, das als Aufnahmemittel mittels zweier Schrauben 66 und 67 mit dem Chassis 1 verbunden ist. Zwei Aufnahmestifte 68 und 69 dienen der Festlegung der Farbbandkassette, während ein Kupplungsstift 70, der von einem nicht gezeichneten Motor angetrieben wird, dem Antrieb des Farbbandes dient. Die Farbbandkassette selbst ist der besseren Übersichtlichkeit halber weggelassen worden.

Man erkennt, daß die Druckunterlage 64 versetzt zu einer Druckunterlage 71 für den zweiten Nadeldrucker 9 in der Personalisierungsdruckvorrichtung 8 angeordnet ist. Diese beiden Druckwerke können also auf gleicher Höhe auf die Fläche des Beleges 80 von der Vorder- und der Rückseite her überlappend einwirken. Die Druckunterlage 71 ist mittels zweier Schrauben 72 als Aufnahmemittel mit dem Chassis 1 verbunden. Während aber die Indossierdruckvorrichtung 7 absolut feststehend ist, ist die Personalisierungsdruckvorrichtung 8 mit seinem Nadeldrucker 9 zwar in Zeilenrichtung feststehend, aber so auf einer Tragplatte 74 angeordnet, daß sie höhenverstellbar ist. Der Nadeldrucker 9 ist dafür mittels Schrauben 73 in der Tragplatte 74 befestigt. Die Tragplatte 74 ist über drei Scherenhebelpaare 84, 75, 76 mit einem Tragteil 85 verbunden, welches mittels Befestigungsschrauben 77 im Chassis 1 befestigt ist. Das Tragteil 85 hat eine senkrecht stehende Rückwand 78, an der ein Getriebe 79 befestigt ist. Von dem Getriebe 79 wird über eine nicht gezeichnete Kurvenscheibe die Tragplatte 74 angehoben, wenn das Getriebe 79 entsprechend eingeschaltet ist. Das hat zur Folge, daß der Nadeldrucker 9 nicht nur auf einer Zeile drucken kann, sondern in mehreren Zeilen z. B. Personalisierungsdrucke anbringen kann.

Die schraffiert gezeichnete Fläche in FIG. 2 soll andeuten, daß dies die Bezugsebene ist, auf die alle Druckvorrichtungen arbeiten und in der der Beleg 80 durch die Transportbahn 10 transportiert wird. Dabei wirken das Codierdruckwerk 2, das Stempeldruckwerk 4 und die Personalisierungsdruckvorrichtung 8 auf die Vorderseite des Beleges 80 ein, während das Stempeldruckwerk 6 und die Indossierdruckvorrichtung 7 auf die Rückseite des Beleges zur Einwirkung gelangen. Die Druckvorrichtungen können je nach dem Transport des Beleges 80 überlappend arbeiten. Z. B. können die beiden Stempeldruckwerke 4 und 6 gleichzeitig ihren Abdruck erzeugen und die Indossierdruckvorrichtung 7 und können die Personalisierungsdruckvorrichtung 8 zumindesten teilweise überlappend arbeiten.

## Patentansprüche

1. Belegcodierer als Auf-Tisch-Gerät, der eine Eingabestation (11) für den Beleg (80) und Transportmittel zum Transportieren des Beleges (80) in eine Ablagestation (12) aufweist, wobei zwischen Eingabestation (11) und Ablagestation (12) modular aufgebaute, feststehende Druck- bzw. Markierungsvorrichtungen (2 bis 9) angeordnet sind, dadurch gekennzeichnet, daß die auf einem Chassis (1) im wesentlichen U-förmige Transportbahn (10) einen Ausgangsschenkel (15) bildet, der aus Antriebsrollen (16, 17, 18, 19) mit einem diese umschlingenden, die Transportbahn (10) begrenzenden ersten Transportriemen (81) und einem zweiten, um zwei Antriebsrollen (20, 21) geschlungenen Transportriemen (82) besteht, der dem ersten Transportriemen (81), den Beleg (80) zwischen sich führend, gegenüberliegt, daß der Eingangsschenkel (15a) aus der Eingabestation (11) besteht, wobei Eingangsschenkel (15a) und Ausgangsschenkel (15) durch einen Teil (14) der Transportbahn (10) verbunden sind und daß an dem Ausgangsschenkel (15) die Druck- bzw. Markierungsvorrichtungen (2 bis 9) mit den zugehörigen Druckwiderlagern (41, 42, 47, 55, 64, 71) derart angeordnet sind, daß einige der Druck- bzw. Markierungsvorrichtungen (2 bis 9) sich seitlich versetzt gegenüberliegen.

2. Belegcodierer nach Anspruch 1, dadurch gekennzeichnet, daß die den Codierdruck bewirkende Druckvorrichtung (2, 3) ein Typenraddruckwerk (3) mit auf beweglichen Speichen angeordneten Drucktypen ist.

3. Belegcodierer nach Anspruch 2, dadurch gekennzeichnet, daß das Typenraddruckwerk (3) auf seinem Tragteil (26) von der Druckunterlage (41) zurückziehbar und verschwenkbar angeordnet ist zum Wechsein der Typenscheibe (3a).

4. Belegcodierer nach Anspruch 3, dadurch gekennzeichnet, daß mehrere gleiche oder unterschiedliche Typensätze auf dem Typenrad (3a) angeordnet sind.

5. Belegcodierer nach Anspruch 4, dadurch gekennzeichnet, daß die Druckunterlage (41) mit mehreren Druckwiderlagern (42) ausgerüstet und in jeweils eine Arbeitsstellung drehbar ist.

6. Belegcodierer nach Anspruch 1, dadurch gekennzeichnet, daß zwei Stempeldruckwerke (4, 6) für die Anbringung von Indossier- und Entwertungsstempeln (5, 13) wahlweise beidseits der Transportbahn (10) für die Belege (80) auf ihren Tragteilen (48, 61) mittels der Aufnahmemittel (49, 50, 61) derart angeordnet sind, daß sie in Transportrichtung im wesentlichen an der gleichen Stelle, aber höhenversetzt zu dem Beleg (80) sind.

7. Belegcodierer nach Anspruch 1, dadurch gekennzeichnet, daß zwei Druckvorrichtungen (7, 8) in Form von Nadeldruckköpfen wahlweise je der Vorder- und Rückseite des Beleges (80) zugeordnet sind, wobei Aufnahmemittel (65, 67, 72) für die Druckunterlagen (64, 71) und Aufnahmemittel (63, 77) und Tragteile (85, 74) für die Druckvorrichtungen in Transportrichtung der Belege (80) um ein geringes Maß versetzt angeordnet sind.

8. Belegcodierer nach Anspruch 1, dadurch gekennzeichnet, daß das Tragteil (74) einer mit einem Nadeldruckkopf (9) ausgestatteten Druckvorrichtung (8) durch ein Getriebe (79) höhenverstellbar ist, derart, daß bei mehrfachem Vorbeibewegen des Beleges (80) über Transportmittel (16 bis 21) ein Druck in mehreren Zeilen erfolgt.

## Claims

1. Document coder as table-top apparatus, which has an infeed station (11) for the document (80) and conveying means to convey the document (80) into a discharge station (12), in which between the infeed station (11) and the discharge station (12) fixed printing- or marking devices (2 to 9) of modular construction are arranged, characterized in that the conveying path (10), which is substantially U-shaped on a chassis (1), forms an exit arm (15), which consists of drive rollers (16, 17, 18, 19) with a first conveyor belt (81), looping around them and delimiting the conveying path (10), and a second conveyor belt (82) looped around two drive rollers (20, 21), which lies opposite the first conveyor belt (81), guiding the document (80) between them, that the entry arm (15a) consists of the infeed station (11), in which the entry arm (15a) and the exit arm (15) are connected by a part (14) of the conveying path (10), and that the printing- or marking devices (2 to 9) with the associated printing supports (41, 42, 47, 55, 64, 71) are arranged on the exit arm (15) such that some of the printing- or marking devices (2 to 9) lie, laterally staggered, opposite each other.

2. Document coder according to claim 1, characterized in that the printing device (2, 3), which brings about the coding printing, is a type-wheel printing mechanism (3), with print types arranged on movable spokes.

3. Document coder according to claim 2, characterized in that the type-wheel printing mechanism (3) is arranged on its supporting piece (26) so as to be able to be withdrawn from the printing base (41) and to be swivelled, to change the type disc (3a).

4. Document coder according to claim 3, characterized in that a plurality of identical or different sets of type are arranged on the type-wheel (3a).

5. Document coder according to claim 4, characterized in that the printing base (41) is equipped with a plurality of printing supports (42) and is rotatable into an operating position in each case.

6. Document coder according to claim 1, characterized in that two stamp printing mechanisms (4, 6) for the application of endorsing- and cancelling stamps (5, 13) are arranged selectively on both sides of the conveying path (10) for the documents (80) on their supporting pieces (48, 61) by means of the receiving means (49, 50, 61), such that in the conveying direction they are substantially at the same place, but vertically displaced to the document (80).

7. Document coder according to claim 1, characterized in that two printing devices (7, 8) in the form of needle print heads are selectively associated respectively with the front- and rear side of the document (80), in which receiving means (65, 67, 72) for the printing bases (64, 71) and receiving means (63, 77) and supporting pieces (85, 74) for the printing devices are arranged, staggered to a small extent, in the conveying direction of the documents (80).

8. Document coder according to claim 1, characterized in that the supporting piece (74) of a printing device (8), which is equipped with a needle print head (9), is vertically adjustable by a gear unit (79), such that with the document (80) being moved past several times via conveying means (16 to 21) a printing in several lines takes place.

**Revendications**

1. Codeur de documents comme appareil de table qui est équipé d'un poste d'entrée (11) pour le document (80) et de moyens de transport pour l'acheminement du document (80) dans un poste de réception (12), des dispositifs d'impression ou de marquage (2 à 9) stationnaires, de construction modulaire étant disposés entre le poste d'entrée (11) et le poste de réception (12), caractérisé par le fait que la voie de transport réalisée sur un châssis (1), pour l'essentiel, en forme de U, forme une branche de sortie (15) qui est constituée de poulies d'entraînement (16, 17, 18, 19) avec une première courroie de transport (81) enlaçant ces dernières et délimitant la voie de transport (10), et une deuxième courroie de transport (82) enlaçant deux poulies d'entraînement (20, 21) qui est située, en amenant le document (80) entre soi, à l'opposé de la première courroie de transport (81), que la branche d'entrée (15a) est constituée du poste d'entrée (11), lesdites branches d'entrée (15a) et branche de sortie (15) étant reliées par un tronçon (14) de la voie de transport (10) et les dispositifs d'impression ou de marquage (2 à 9) à la branche de sortie (15) avec les butées (41, 42, 47, 55, 64, 71) correspondantes étant disposés de telle sorte que certains des dispositifs d'impression ou de marquage (2 à 9) soient situés face à face avec un décalage latéral.

2. Codeur de documents selon la revendication 1, caractérisé par le fait que le dispositif d'impression (2, 3), opérant l'impression de codage est une imprimante à disque porte-caractères (3) dont les caractères d'impression sont disposés sur des bras radiaux mobiles.

3. Codeur de documents selon la revendication 2, caractérisé par le fait que l'imprimante à disque porte-caractères (3) sur son élément support (26) est disposée de façon à pouvoir être placée en retrait du support d'impression (41) et être orientée pour permettre le changement du disque porte-caractères (3a).

4. Codeur de documents selon la revendication 3, caractérisé par le fait que plusieurs jeux de caractères identiques ou différents sont disposés sur le disque porte-caractères (3a).

5. Codeur de documents selon la revendication 4, caractérisé par le fait que le support d'impression (41) est équipé de plusieurs butées (42) et peut être tourné en respectivement une position de travail.

6. Codeur de documents selon la revendication 1, caractérisé par le fait que deux imprimantes de cachet (4, 6) pour l'apposition de cachets d'endossement et d'annulation (5, 13) sont disposées facultativement de part et d'autre de la voie de transport (10) pour les documents (80) sur leurs éléments supports (48, 61) à l'aide des moyens de réception (49, 50, 61), de telle sorte qu'elles se trouvent dans le sens de transport, pour l'essentiel, au même endroit mais décalées en hauteur par rapport au document (80).

7. Codeur de documents selon la revendication 1, caractérisé par le fait que deux dispositifs d'impression (7, 8), sous forme de têtes d'impression à aiguilles sont associés facultativement soit au recto soit au verso du document (80), des moyens de réception (65, 67, 72) pour les supports d'impression (64, 71) et des moyens de réception (63, 77) et éléments supports (85, 74) pour les dispositifs d'impression étant disposés légèrement décalés dans le sens de transport des documents (80).

8. Codeur de documents selon la revendication 1, caractérisé par le fait que l'élément support (74) d'un dispositif d'impression (8) équipé d'une tête d'impression à aiguilles (9) est réglable en hauteur par un engrenage (79), de telle sorte qu'en cas de défilement répété du document (80) par l'intermédiaire de moyens de transport (16 à 21) l'impression ait lieu dans plusieurs lignes.

FIG. 1

FIG. 2

FIG. 3 A

FIG. 3 B